# FASCICULE DE BREVET EUROPEEN

(11) **EP 3 969 213 B1**
(45) Date de publication et mention de la délivrance du brevet: **01.10.2025**
(21) Numéro de dépôt: 20737514.8
(22) Date de dépôt: 15.05.2020
(51) Int. Cl.: B22F 5/00, B22F 7/08, B22F 10/25, B22F 10/36, B23K 26/14, B23K 26/342, B33Y 10/00, B33Y 50/02, B33Y 80/00, B22F 12/45, B23K 101/00, B23K 103/14, B23K 103/18, F01D 25/24

(54) **PROCÉDÉ DE FABRICATION ADDITIVE POUR UNE PIÈCE MÉTALLIQUE**
GENERATIVES HERSTELLUNGSVERFAHREN FÜR EIN METALLWERKSTÜCK
ADDITIVE MANUFACTURING PROCESS FOR A METAL PART

(30) Priorité: 16.05.2019 FR 1905161
(43) Date de publication de la demande: 23.03.2022
(73) Titulaire: SAFRAN AIRCRAFT ENGINES, 75015 Paris (FR)
(72) Inventeur: SISTACH, Hugo, 77550 MOISSY-CRAMAYEL (FR); COLAS, Cédric, Pierre, Jacques, 77550 MOISSY-CRAMAYEL (FR); GRALL, Terence, 77550 MOISSY-CRAMAYEL (FR); PIETTE, Romaric, Jean-Marie, 77550 MOISSY-CRAMAYEL (FR); PRODENT, James, 77550 MOISSY-CRAMAYEL (FR)
(74) Mandataire: Ernest Gutmann - Yves Plasseraud S.A.S.
(86) Numéro de dépôt international: PCT/FR2020/050812
(87) Numéro de publication internationale: WO 2020/229784

(56) Documents cités:
- CN-A- 108 161 229
- FR-A1- 3 046 739
- FR-A1- 3 064 509
- US-A1- 2012 132 627

## Description

### Domaine technique de l'invention

La présente invention est relative à un procédé de fabrication additive d'une pièce métallique. La présente invention concerne notamment un procédé de fabrication de pièces de faible épaisseur en alliage métallique, et particulièrement des pièces pouvant faire partie d'une turbomachine pour aéronef.

### Etat de la technique antérieure

Dans le présent texte, « procédé de fabrication additive » a pour sens tant une fabrication initiale de la pièce qu'une réparation de pièce déjà fabriquée (par quelque technique que ce soit) et dont on recharge une zone par « fabrication additive », c'est-à-dire par un apport de matière qui peut être un procédé LMD comme ci-après.

Ainsi, on connait des procédés de fabrication additive par dépôt de matière sur une pièce formant substrat, avec un apport d'énergie localisée qui permet de porter localement la matière à la température de fusion.

Si un laser est utilisé pour apporter l'énergie, ces procédés sont appelés « LMD » pour Laser Metal Deposition (dépôt de métal par laser).

Lorsque l'on veut former un bossage d'une hauteur conséquente par un tel procédé de fabrication additive, un des procédés de fabrication additive consiste à pratiquer un apport de matière grâce à un fil de métal (technique appelée LMD fil). On peut ainsi former plusieurs cordons de matière, de préférence de manière adjacente entre eux, obtenus par fusion d'un fil servant de métal d'apport. La source de chaleur est par exemple un faisceau laser. En empilant plusieurs couches de fil fondu, on peut ainsi former un bossage de plusieurs millimètres de hauteur par rapport au substrat.

Mais, pour des pièces substrat de faible épaisseur en alliage métallique, typiquement des pièces d'épaisseur inférieure à 2 mm, la technique de LMD avec dépôt d'un fil nécessite un apport d'énergie conséquent, et cet apport d'énergie a tendance à impacter et déformer la pièce formant substrat sur laquelle on pratique le dépôt.

Si on prend par exemple une pièce de structure comme une virole de carter, il s'agit typiquement d'une pièce s'étendant généralement sur une surface importante avec localement une épaisseur inférieure à 2 mm et cette pièce doit porter une pluralité de formes locales pour y fixer des équipements auxiliaires.

Par ailleurs, il existe une contrainte sur les temps de fabrication qui incite à prévoir des process rapides pour obtenir les pièces désirées.

Il est donc apparu un besoin pour proposer une solution plus créer rapidement un bossage par un procédé de fabrication additive sur une pièce d'épaisseur inférieure à 2 mm, sans substantiellement déformer ladite pièce.

Dans la configuration d'une recharge d'une pièce existante, il peut être souhaité que la déformation induite par l'apport de matière ne dépasse pas une valeur prédéterminée par exemple 0,5 mm ou par exemple 1 mm, car sinon il peut dans certains cas y avoir flambage de la pièce ou un impact négatif sur la microstructure, ceci devant toutefois être apprécié au regard d'un taux de dépôt très faible, impliquant une durée de fabrication et un cout de fabrication trop important. CN 108 161 229 A et US 2012/132627 A1 concernent des procédés de fabrication additive par dépôt de matière sur une pièce formant substrat avec contrôle d'énergie surfacique.

### Résumé de l'invention

C'est dans ce contexte qu'est donc proposé un procédé de fabrication additive par dépôt de matière sur une pièce formant substrat, ladite pièce formant substrat étant faite d'alliage métallique, le procédé comprenant :
/a/- au moins une étape de dépôt à faible apport d'énergie, correspondant à une énergie surfacique inférieure à 400 J/mm², sur une surface prédéfinie à déposer, pour former une couche de base,
/b/- au moins une étape de dépôt à fort apport d'énergie, correspondant à une énergie surfacique supérieure à 500 J/mm², par dépôt d'un fil (sous-entendu au moins un fil) sur la couche de base déjà formée, pour former ainsi une ou plusieurs couches supplémentaires, la couche de base fournissant un effet d'écran qui atténue l'impact thermique de l'étape de fort apport d'énergie sur la pièce substrat, dans lequel au cours de l'étape de dépôt à faible apport d'énergie /a/ on apporte du métal sous forme de poudre.

Grâce à ces dispositions, la zone affectée thermiquement ('ZAT' en acronyme) est relativement limitée, car la couche de base est réalisée par une étape de dépôt à faible apport d'énergie et concernant la ou les étapes de dépôt à fort apport d'énergie, la couche de base fournit naturellement un effet d'écran ce qui atténue l'impact thermique du fort apport d'énergie sur la pièce substrat. Pour autant, on met à profit les étapes de dépôt à fort apport d'énergie productives pour réaliser la forme souhaitée dans un temps de process limité et le plus faible possible au regard de l'absence de nécessité de faire une reprise d'usinage ou formage sur la pièce.

Pour obtenir l'énergie surfacique désirée, on détermine les 3 paramètres suivants : puissance du faisceau, surface de la zone d'impact et vitesse d'avance.

Dans divers modes de réalisation de l'invention, on peut éventuellement avoir recours en outre à l'une et/ou à l'autre des dispositions suivantes, prises isolément ou en combinaison.

Selon un aspect, la pièce formant substrat présente une épaisseur (e3) inférieure à 2 mm à l'endroit cible du dépôt. Dans ce cas, on visera préférentiellement une déformation induite par le procédé proposé inférieure à 0,3 mm, de préférence inférieure à 0,2 mm. Le procédé proposé permet ainsi de traiter des pièces peu épaisses, tels que certains carters ou des viroles, diverses pièces d'habillage que l'on peut trouver dans l'aéronef et en particulier dans la turbomachine. Dans ce cas, pour une fabrication initiale, on peut simplifier l'étape de fonderie et ensuite rajouter toute forme(s) souhaitée(s) grâce au procédé proposé.

Selon un autre aspect, il est établi en outre une contrainte de déformation maximale, ladite pièce formant substrat (3) devant subir une déformation inférieure à 1 mm. Avantageusement, le procédé peut être appliqué quelle que soit l'épaisseur de la pièce formant substrat, le paramètre formant la contrainte limitante étant la déformation subie par la pièce au cours du procédé de recharge, voire de sa fabrication initiale si elle est très fine.

Selon un autre aspect, l'étape de dépôt à faible apport d'énergie est réalisée avec une énergie surfacique comprise entre 50 J/mm² et 200 J/mm², moyennant quoi, on constate avantageusement un faible impact thermique sur le substrat. Selon un aspect, une passe permet de déposer du matériau sur une hauteur de l'ordre de 0,5 mm.

Selon un autre aspect, l'étape de dépôt à fort apport d'énergie est réalisée avec une énergie surfacique comprise entre 800 J/mm² et 1200 J/mm². Selon un aspect, une passe permet de déposer du matériau sur une hauteur comprise entre 1 mm et 1,5 mm. Ainsi on dispose d'une rapidité d'exécution des passes de fil.

Selon l'invention, au cours de l'étape de dépôt à faible apport d'énergie (/a/) on apporte du métal sous forme de poudre, laquelle est pulvérisée sur le substrat, via la source d'énergie. Ceci confère souplesse et contrôlabilité au procédé. Cette technique peut être résumée de la même manière que l'on a ci-avant présenté la technique LMD fil, à ceci près que la poudre remplace alors le fil.

Selon un autre aspect, la source d'énergie est un laser. On peut utiliser une première source laser pour l'étape de dépôt à faible apport d'énergie de puissance autour de 500W (à 10% près) ; technique dite LMD poudre). On peut utiliser une seconde source laser pour l'étape de dépôt à fort apport d'énergie de puissance autour de 1000W (à 10% près) ou plus ; technique dite LMD fil.

A noter toutefois que pour l'étape (ou les étapes) de dépôt à fort apport d'énergie, d'autres sources qu'un laser pourront être retenues. Ainsi, à la place d'une technique de dépôt LMD fil, on peut prévoir d'utiliser par exemple, comme procédés bien connus :
- un procédé TIG (procédé de soudage à l'arc avec une électrode non fusible, en présence d'un métal d'apport si besoin. TIG est un acronyme de Tungsten Inert Gas, où Tungsten (Tungstène) désigne l'électrode et Inert Gas (Gaz inerte) le type de gaz plasmagène utilisé,
- ou procédé CMT ((Cold Metal Transfer) qui est procédé de soudage qui, en comparaison avec le soudage MIG/MAG plus conventionnel, est relativement froid, via un passage permanent du chaud au froid.

L'avantage du laser est toutefois de pouvoir maîtriser parfaitement la zone d'impact du faisceau énergétique et avoir un bon maintien de l'énergie apportée.

Selon un autre aspect, la pièce formant substrat est formée en alliage métallique à base d'acier chargé en nickel ou en titane. Il s'agit de matériaux performants pour les pièces de turbomachine d'aéronefs.

Selon un autre aspect, la pièce formant substrat est formée en INCONEL 718.

Selon un autre aspect, la pièce formant substrat est formée en titane TA6V.

Selon un autre aspect, il peut être prévu une temporisation d'attente entre l'étape /a/ et l'étape /b/. Moyennant quoi on peut attendre que la température du matériau déposé baisse pour déposer à nouveau du matériau par-dessus, ceci permettant de limiter l'impact thermique dans la pièce substrat sous-jacente.

Selon un autre aspect, il peut être prévu plusieurs étapes successives de dépôt à faible apport d'énergie. Optionnellement on peut prévoir des temporisations d'attente entre les différentes passes de dépôt à faible énergie. Ceci permet de limiter l'élévation de température et notamment la température pic locale dans la pièce formant substrat sous le dépôt ; on limite ainsi l'étendue de la zone affectée thermiquement.

Selon un autre aspect, la hauteur de la (ou les) couche(s) déposées par faible apport d'énergie présente une dimension équivalente à l'excursion transversale (R1) de la zone affectée thermiquement. Ici, on entend par excursion transversale de la zone affectée thermiquement, une zone autour de la zone ayant reçu le dépôt et qui s'en trouve thermiquement affectée. Par exemple pour un dépôt de forme discoïde, nous constatons une zone sous forme de corolle autour de la forme discoïde.

Selon un autre aspect, lequel il peut être prévu plusieurs étapes successives de dépôt à fort apport d'énergie. On peut ainsi former une projection d'une hauteur souhaitée quelconque même assez importante en utilisant plusieurs passes de dépôt à fort apport d'énergie.

Selon un autre aspect, le matériau apporté en poudre et/ou en fil est identique au matériau du substrat. On obtient ainsi une fusion cohérente et une accroche cristalline optimale.

Selon encore un aspect, la forme finie formée par la couche de base (qui est la première couche déposée sur le substrat) et la ou les couches supplémentaires (déposée(s) ensuite sur la couche de base), forme un bossage de hauteur (H5 ci-après) supérieure à l'épaisseur (e3 ci-après) du substrat à l'endroit du dépôt des couches. On a alors plus de vraie limite à la hauteur de la forme à réaliser.

Selon un autre aspect, on prévoit utilisation d'une pièce martyre thermique qui est agencée de manière adjacente à la pièce formant substrat à l'opposé de la zone de dépôt. Cette pièce martyre peut être par exemple réalisée en cuivre et fait office de pont thermique pour évacuer des calories.

On définit une pièce martyre comme une pièce que l'on place à l'opposé de la face travaillée de la pièce à travailler et sur laquelle on applique une force pour la maintenir contre la pièce à travailler. Elle a de préférence au moins localement la même forme que la pièce à travailler.

Elle permet via un maintien mécanique de réduire les déformations de la pièce et les affaissements qui pourraient exister lors de l'ajout de bossage sur la zone de rechargement. De plus, de telles pièces martyres sont en cuivre et permettent ainsi de mieux évacuer la chaleur accumulée dans la pièce au travail. Ce qui permet de limiter les déformations de la pièce au travail.

La présente divulgation vise aussi une virole de carter intermédiaire de turbomachine pour aéronef comprenant un ou plusieurs bossages obtenus par le procédé décrit ci- dessus, considéré avec tout ou partie de ses caractéristiques. Cet aspect n'est pas couvert par les revendications.

### Brève description des figures

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
[Fig. 1] illustre une étape de dépôt à faible apport d'énergie sur une pièce substrat métallique selon un mode de réalisation de l'invention,
[Fig. 2] illustre une étape de dépôt à fort apport d'énergie sur la pièce substrat métallique, à la suite de l'étape de dépôt à faible apport d'énergie,
[Fig. 3] illustre une forme finie, obtenue selon le procédé proposé,
[Fig. 4] illustre un exemple de succession d'étapes,
[Fig. 5] illustre une partie de virole d'un carter de turbomachine,
[Fig. 6] illustre un exemple de virole de carter intermédiaire de turbomachine pour aéronef. Dans le domaine aéronautique, les turbomachines sont des machines complexes qui sont constituées d'un assemblage d'une multitude de pièces techniques. Pour fabriquer de telles pièces techniques, on utilise classiquement des procédés de fabrication tels que : moulage/fonderie, forgeage, estampage, usinage, électro-érosion, traitement de surface, traitement thermique. De plus, les techniques de fabrication additive connaissent un développement important, et c'est l'objet de l'exposé qui suit.

Sur les différentes figures, les mêmes références désignent des éléments identiques ou similaires.

### Description détaillée de l'invention

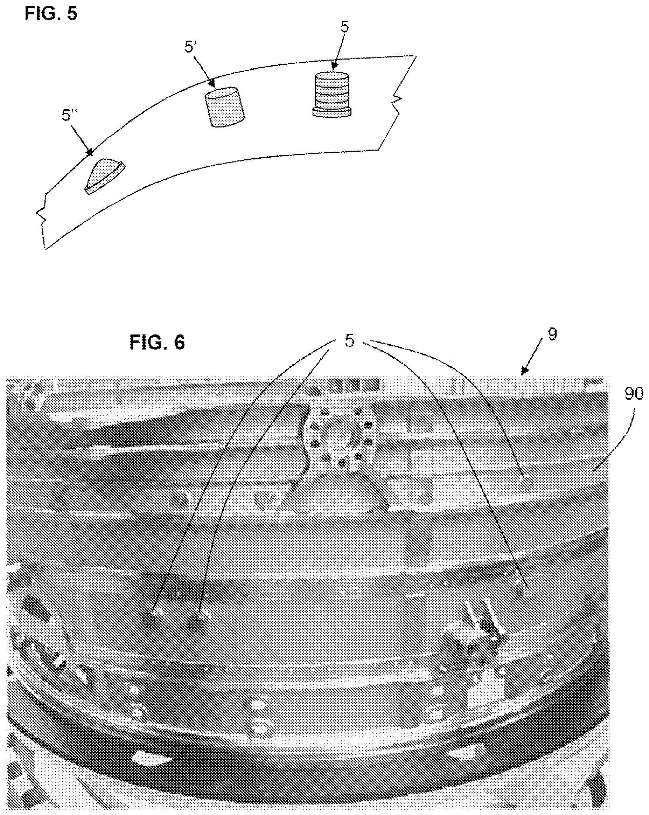

La figure 6 illustre une virole de carter intermédiaire de turbomachine pour aéronef, repéré généralement 9. On souhaite réaliser diverses formes en projection par rapport au corps principal du carter 90, c'est-à-dire en saillie externe dans le sens de l'épaisseur ou de la hauteur, les deux termes étant synonymes; ces formes sont identifiées génériquement par le repère 5.

L'épaisseur est la dimension de la pièce qui est au moins 10 fois plus faible que l'une de ses autres dimensions, longueur et largeur respectivement si l'on suppose une pièce plane. Dans le cas de la virole de carter intermédiaire 9, l'épaisseur ou la hauteur sont suivant l'axe Z, dans le repère orthonormé X,Y,Z, l'axe de la virole (annulaire) étant (virole montée dans la turbomachine) l'axe X, qui est l'axe longitudinal de la turbomachine, ou axe de rotation de la partie rotor (turbine/compresseur) par rapport à la partie stator (carter par exemple).

Le procédé proposé prévoit un dépôt de métal sur une pièce formant substrat repérée 3. La pièce formant substrat présente une épaisseur e3 inférieure à 2 mm à l'endroit cible du dépôt. Toute épaisseur e3 comprise entre 1 mm et 2 mm est considérée pour l'application du procédé proposé.

La pièce formant substrat est faite d'alliage métallique. Le matériau de la pièce peut être un alliage nickel de type N18. Le matériau de la pièce peut être un alliage de type Astroloy^{™}. Le matériau de la pièce peut être un alliage de type INCONEL 718. Le matériau de la pièce peut être un alliage titane de type TA6V.

Le procédé proposé prévoit de faire un premier dépôt de matériau avec un faible impact thermique sur la pièce formant substrat puis effectuer un deuxième dépôt de matériau plus productif permettant de déposer une quantité de matière substantielle rapidement au-dessus du premier dépôt.

Plus précisément, on prévoit une première étape notée /a/.

Il s'agit d'une étape /a/ de dépôt à faible apport d'énergie. Ce faible apport d'énergie est quantifié par une énergie surfacique inférieure à 400 J/mm². Préférentiellement, le dépôt peut être réalisé avec une énergie surfacique comprise entre 50 J/mm² et 200 J/mm². Le matériau est apporté sous forme de poudre 11. Il s'agit d'un matériau métallique, similaire ou identique au matériau métallique de la pièce substrat.

On peut utiliser, pour l'étape de dépôt à faible apport d'énergie, une première source laser 4 de puissance autour de 500W.

Selon un autre aspect, pour l'étape de dépôt à faible apport d'énergie, la puissance du laser peut être comprise entre 200 W et 700W. La vitesse de balayage du laser peut être comprise entre 1200 mm/s et 2000 mm/s. Le diamètre de la surface éclairée par le laser peut être comprise entre 100 µm et 1 mm. La combinaison de la puissance du laser, sa surface d'impact et sa vitesse de balayage permet d'obtenir une énergie surfacique désirée pour un apport à faible énergie surfacique comme mentionné ci-dessus.

Il peut être effectué une ou plusieurs passes de dépôt avec ce faible apport d'énergie. Avantageusement, chaque passe permet de déposer du matériau sur une hauteur de 0,5 mm (à 20% près).

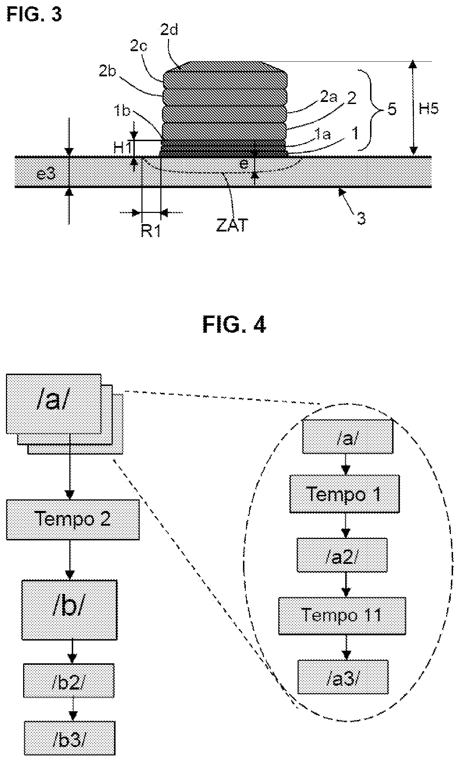

On forme ainsi une couche de base, repérée 1 pour la première passe et respectivement 1a,1b, pour les passes suivantes. Les passes peuvent être considérées comme des sous étapes (notées a2, a3, en figure 4) de la première étape /a/.

Après la première étape, on prévoit une seconde étape notée /b/.

Il s'agit d'une étape /b/ de dépôt à fort apport d'énergie. Ce fort apport d'énergie est quantifié par une énergie surfacique supérieure à 500 J/mm². Préférentiellement, le dépôt peut être réalisé avec une énergie surfacique comprise entre 800 J/mm² et 1200 J/mm².

Le matériau est apporté sous forme de fil 21. Pour le fil en question, il s'agit d'un matériau métallique, similaire ou identique au matériau métallique de la pièce substrat. Le fil en question peut être issu d'un procédé d'extrusion et être stocké dans une bobine ou un dévidoir. Selon une configuration la section de ce fil est ronde. Toutefois il n'est pas exclu d'avoir une section différente par exemple hexagonale, octogonale, décagonale etc.

Le fil fondu vient se déposer sur la couche de base déjà formée. On peut utiliser, pour l'étape de dépôt à fort apport d'énergie, une seconde source laser 4' de puissance autour de 1000W ou plus. La source est émise par une tête laser 63, par exemple de type laser CO2, YAG ou autre.

Selon un autre aspect, pour l'étape de dépôt à fort apport d'énergie, la puissance du laser peut être comprise entre 800 W et 1000 W. La vitesse de balayage du laser peut être comprise entre 100 mm/s et 1500 mm/s. Le diamètre de la surface éclairée peut être comprise entre 100 µm et 1 mm. La combinaison de la puissance du laser, sa surface d'impact et sa vitesse de balayage permet d'obtenir une énergie surfacique désirée pour un apport à fort énergie surfacique comme mentionné ci-dessus

À l'étape /b/, on forme ainsi une couche supplémentaire, repérée 2 pour la première passe et respectivement 2a,2b,2c,2d pour les passes suivantes. Les passes peuvent être considérées comme des sous étapes (notées b2, b3) de la deuxième étape /b/.

On note qu'il peut être prévu une temporisation d'attente entre l'étape /a/ et l'étape /b/. En attendant que la température du matériau déposé baisse pour déposer à nouveau du matériau par-dessus, ceci permettant de limiter l'impact thermique dans la pièce substrat sous-jacente ; on limite de ce fait l'étendue de la zone affectée thermiquement ZAT, tant en profondeur qu'en excursion transversale.

Le matériau apporté en poudre et/ou en fil est préférentiellement identique au matériau du substrat. Toutefois, le matériau apporté, soit en poudre soit en fil, peut être d'une nuance différente par rapport au matériau du substrat 3.

Généralement, plus de détails sur la façon de réaliser l'étape /b/ peut être trouvé dans le document FR3046739 émanant de la demanderesse.

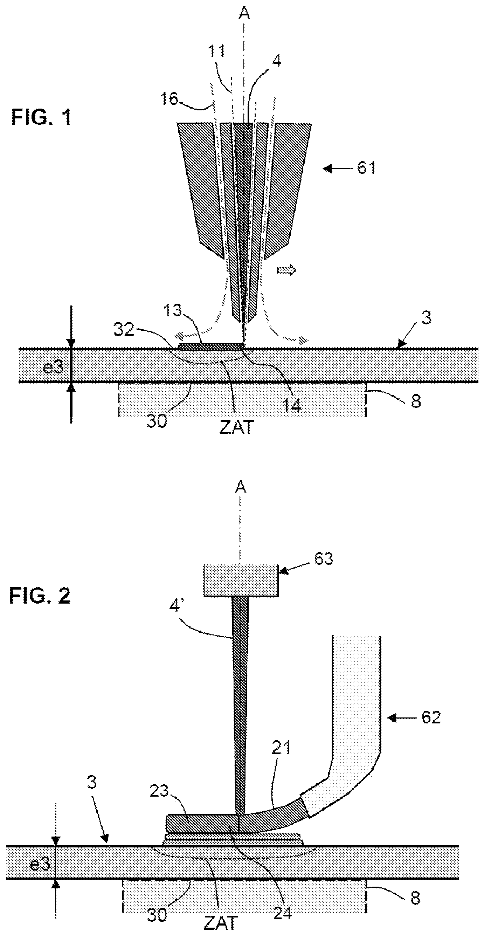

Sur la figure 1, on a représenté une tête 61 de dépôt de poudre métallique, avec le faisceau laser 4 centré sur l'axe A, une buse annulaire de dispense de la poudre 11, une buse annulaire de dispense de flux d'argon 16. Ce genre de tête de dépose de poudre métallique associée à un faisceau laser est connu en soi donc non détaillé plus avant dans le présent document.

Sur l'exemple illustré, la tête avance vers la droite et à l'endroit de l'impact du faisceau laser 14 la poudre fond puis se solidifie sous forme d'un cordon de matériau déposé 13.

Sur la figure 2, on a représenté une tête 62 de dépôt de fil métallique 21, avec la source laser 63 émettant un faisceau laser 4' centré sur l'axe A, la tête de dépôt 62 étend agencée en avant de l'axe lors du déplacement de la tête.

Sur l'exemple illustré, la tête avance vers la droite et à l'endroit de l'impact du faisceau laser 24 le fil fond puis se solidifie sous forme d'un cordon de matériau déposé 23. Le procédé peut prévoir des allers-retours pour former plusieurs cordons de fil fondu les uns des autres. Optionnellement, on prévoit utilisation d'une pièce martyre thermique, notée 8, qui est agencée de manière adjacente à la surface intérieure 30 du substrat.

Cette pièce martyre 8 peut être par exemple réalisée en cuivre et fait office de pont thermique pour évacuer des calories, et éviter des zones de pic de température à l'intérieur de la pièce formant substrat 3.

Grâce à la présence de cette pièce martyre 8, la profondeur de la zone affectée thermiquement notée 'e' peut être limitée et rester relativement modérée, surtout si on compare à un dépôt à fort apport d'énergie comme première étape.

La figure 4 illustre diverses temporisations. Une temporisation Tempo2 est prévue entre la première étape /a/ est la seconde étape /b/. Une temporisation Tempo1 est prévue entre les deux premières sous étapes de la première étape. Une temporisation Tempo11 est prévue entre deux autres sous étapes de la première étape.

Sur la figure 3, on note que la hauteur H1 de la (ou les) couche(s) déposées par faible apport d'énergie présente une dimension équivalente à l'excursion transversale R1 de la zone affectée thermiquement ZAT. L'excursion transversale de la zone affectée thermiquement peut présenter différentes formes elle s'étend autour de la zone ayant reçu le dépôt et qui s'en trouve thermiquement affectée. Par exemple pour un dépôt de forme discoïde, nous constatons une zone sous forme de corolle autour de la forme discoïde.

On pourra voir typiquement H1 et R1 de l'ordre de 2 à 5 mm.

Généralement, le taux de dépôt global obtenu par le procédé proposé peut atteindre 800 cm³ par heure. Par exemple pour le faible apport d'énergie le taux de dépôt peut être de l'ordre de 100 cm³/h ; pour les étapes à fort apport d'énergie, le taux de dépôt peut être de l'ordre de 1000 cm³/h.

En fonction du ratio surface/hauteur, plus on a une grande surface et une faible hauteur, plus le procédé à faible apport d'énergie sera utilisé par rapport au fort apport d'énergie.

Sur la figure 5, on constate que plusieurs formes de bossage peuvent être obtenues par le procédé précédemment décrit. Par exemple un premier bossage cylindrique 5 avec une base un peu plus large, un autre bossage cylindrique pur 5', et un bossage avec un sommet arrondi 5".

Selon une autre configuration non illustrée aux figures, l'épaisseur de la pièce formant substrat n'est pas limitée (e3 > 2mm) mais le procédé requiert une contrainte de déformation maximale.

Par exemple, ladite pièce formant substrat 3 doit subir une déformation inférieure à 0,5 mm ou inférieure à 1 mm. Le fait de commencer par un une ou plusieurs étapes à faible apport d'énergie puis de poursuivre avec une ou plusieurs étapes à fort apport d'énergie permet dans ce cas également de limiter l'impact thermique sur la pièce et de circonscrire la zone affectée thermiquement ZAT à la plus petite taille possible.

On note qu'au lieu de déplacer les têtes, on pourrait en alternative déplacer la pièce 3 pour le(s) dépôt(s) en gardant la tête laser fixe.

## Revendications

1. Procédé de fabrication additive par dépôt de matière sur une pièce formant substrat (3), ladite pièce formant substrat étant faite d'alliage métallique et, le procédé comprenant :
/a/- au moins une étape de dépôt à faible apport d'énergie, correspondant à une énergie surfacique inférieure à 400 J/mm², sur une surface prédéfinie à déposer, pour former une couche de base (1;1a),
/b/- au moins une étape de dépôt à fort apport d'énergie, correspondant à une énergie surfacique supérieure à 500 J/mm², par dépôt d'un fil sur la couche de base déjà formée, pour former ainsi une ou plusieurs couches supplémentaires (2;2a;2b),
la couche de base fournissant un effet d'écran qui atténue l'impact thermique de l'étape de fort apport d'énergie sur la pièce substrat,
dans lequel au cours de l'étape de dépôt à faible apport d'énergie /a/ on apporte du métal
sous forme de poudre (11).

2. Procédé selon la revendication 1, dans lequel ladite pièce formant substrat (3) présente une épaisseur (e3) inférieure à 2 mm à l'endroit cible du dépôt.

3. Procédé selon la revendication 1 ou 2, dans lequel il est établi en outre une contrainte de déformation maximale, ladite pièce formant substrat (3) devant subir une déformation inférieure à 1 mm.

4. Procédé selon l'une des revendications 1 à 3, dans lequel la source d'énergie est un laser (4;4').

5. Procédé selon l'une des revendications 1 à 4, dans lequel la pièce formant substrat est formée en alliage métallique à base d'acier chargé en nickel ou en titane.

6. Procédé selon l'une des revendications 1 à 5, dans lequel il est prévu une temporisation, Tempo1, d'attente entre l'étape /a/ et l'étape /b/.

7. Procédé selon l'une des revendications 1 à 6, dans lequel il est prévu plusieurs étapes successives de dépôt à faible apport d'énergie.

8. Procédé selon l'une des revendications 1 à 7, dans lequel il est prévu plusieurs étapes successives de dépôt à fort apport d'énergie.

9. Procédé selon l'une des revendications 1 à 6, dans lequel le matériau apporté en poudre et/ou en fil est identique au matériau de la pièce formant substrat.

10. Procédé selon l'une des revendications 1 à 8, dans lequel la forme finie (5) formée par la couche de base (1;1a;1b) et la ou les couches supplémentaires (2;2a;2b) déposée(s) sur elle, forme un bossage de hauteur supérieure (H5) à l'épaisseur (e3) de la pièce formant substrat à l'endroit du dépôt.

## Patentansprüche

1. Additives Fertigungsverfahren durch Abscheiden von Material auf einem substratbildenden Teil (3), wobei das substratbildende Teil aus einer Metalllegierung besteht und wobei das Verfahren umfasst:
/a/- zumindest einen Schritt des Abscheidens mit niedrigem Energieeintrag, der einer Oberflächenenergie von weniger als 400 J/mm² entspricht, auf einer zu beschichtenden vorbestimmten Oberfläche zur Bildung einer Grundschicht (1; 1a);
/b/-zumindest einen Schritt des Abscheidens mit hohem Energieeintrag, der einer Oberflächenenergie von mehr als 500 J/mm² entspricht, durch Abscheiden eines Drahtes auf der bereits gebildeten Grundschicht zur Bildung einer oder mehrerer Zusatzschichten (2; 2a; 2b);
wobei die Grundschicht eine Abschirmwirkung sicherstellt, die die thermische Auswirkung von dem Schritt des Abscheidens mit hohem Energieeintrag auf das Substratteil abschwächt,
wobei während des Schritts des Abscheidens mit niedrigem Energieeintrag /a/ Metall in Form von Pulver (11) zugeführt wird.

2. Verfahren nach Anspruch 1, wobei das substratbildende Teil (3) an der Zielstelle der Abscheidung eine Dicke (e3) von weniger als 2 mm aufweist.

3. Verfahren nach Anspruch 1 oder 2, wobei ferner eine maximale Verformungslast eingestellt wird, wobei das substratbildende Teil (3) einer Verformung von weniger als 1 mm unterliegt.

4. Verfahren nach einem der Ansprüche 1 bis 3, wobei die Energiequelle ein Laser (4; 4') ist.

5. Verfahren nach einem der Ansprüche 1 bis 4, wobei das substratbildende Teil aus einer Metalllegierung auf Stahlbasis mit Nickel- oder Titananteil hergestellt ist.

6. Verfahren nach einem der Ansprüche 1 bis 5, wobei zwischen Schritt /a/ und Schritt /b/ eine Wartezeit, Tempo1, vorgesehen ist.

7. Verfahren nach einem der Ansprüche 1 bis 6, wobei mehrere aufeinanderfolgende Schritte des Abscheidens mit niedrigem Energieeintrag vorgesehen sind.

8. Verfahren nach einem der Ansprüche 1 bis 7, wobei mehrere aufeinanderfolgende Schritte des Abscheidens mit hohem Energieeintrag vorgesehen sind.

9. Verfahren nach einem der Ansprüche 1 bis 6, wobei das in Pulver- und/oder Drahtform zugeführte Material mit dem Material des substratbildenden Teils identisch ist.

10. Verfahren nach einem der Ansprüche 1 bis 8, wobei die aus der Grundschicht (1; 1a; 1b) und der bzw. den darauf abgeschiedenen Zusatzschicht(en) (2; 2a; 2b) gebildete Fertigform (5) eine Erhebung mit einer Höhe (H5) bildet, die größer ist als die Dicke (e3) des substratbildenden Teils an der Abscheidungsstelle.

## Claims

1. A method for additive manufacturing by depositing material on a part forming a substrate (3), said part forming a substrate being made of a metal alloy, and the method comprising:
/a/- at least one step of low-energy deposition, corresponding to a surface energy of less than 400 J/mm², on a predefined surface to be deposited, to form a base layer (1;1a),
/b/- at least one step of high-energy deposition, corresponding to a surface energy greater than 500 J/mm², by depositing a wire on the base layer already formed, to form one or more additional layers (2;2a;2b),
the base layer providing a screening effect that lowers the thermal impact of the high-energy deposition on the substrate part,
wherein during the low-energy deposition step, metal in powder form (11) is provided.

2. A method according to claim 1, wherein the said part forming a substrate (3) has a thickness (e3) of less than 2 mm at the target location of the deposition.

3. A method according to claim 1 or 2, wherein a maximum deformation stress is further established, the said part forming a substrate (3) having to undergo a deformation of less than 1 mm.

4. A method according to any of claims 1 to 3, wherein the energy source is a laser (4;4').

5. A method according to any of claims 1 to 4, wherein the part forming a substrate is formed from a metal alloy based on steel loaded with nickel or titanium.

6. A method according to any of claims 1 to 5, wherein provision is made for a waiting time Tempo1 between step /a/ and step /b/.

7. A method according to any of claims 1 to 6, wherein provision is made for several successive steps of low-energy depositions.

8. A method according to any of claims 1 to 7, wherein provision is made for several successive steps of high-energy depositions.

9. A method according to any of claims 1 to 6, wherein the material supplied in powder and/or wire form is identical to the material of the part forming a substrate.

10. A method according to any of claims 1 to 8, wherein the finished form (5) formed by the base layer (1; 1a; 1b) and the additional layer(s) (2; 2a; 2b) deposited thereon, forms a boss of height (H5) greater than the thickness (e3) of the part forming a substrate at the location of the deposition.
